# EUROPEAN PATENT APPLICATION

(11) **EP 0 574 595 A1**
(43) Date of publication of application: **22.12.1993**
(21) Application number: 92109692.1
(22) Date of filing: 09.06.1992
(51) Int. Cl.: B62K 19/18

(54) **A joint apparatus for use in a bicycle frame**

(71) Applicant: Hsu, Tse-Sheng, Chin Shui Town Taichung County (TW)
(72) Inventor: Hsu, Tse-Sheng, Chin Shui Town Taichung County (TW)
(74) Representative: Kador & Partner

(57) **Abstract**

The present invention, relating to a joint apparatus for use in a bicycle frame, consists of the connection tubes (11), which is coupled with the frame tube (30), with a tapered set tube (20) serving as an anchoring means to ensure that the frame tube is securely held in place by the connection tube.

## Description

### BACKGROUND OF THE PRESENT INVENTION

The present invent ion relates to a bicycle frame, and particularly to a joint apparatus, for use in a bicycle frame.

The assembly of the bicycle frames, made mostly of iron, steel, chromium-molybdenum-steel alloy, aluminum alloy, carbonaceous fiber, etc., are usually carried out by means of welding in most cases or gluing on some occasions. With the exception of the bicycle frames of iron or steel material, the application of welding in the assembly of bicycle frames made of aluminum alloy poses a specific safety problem. In other words, the welded joints of the bicycle frame of aluminum alloy material tend to crack easily, resulting in a potential safety hazard, not to mention the high cost of the materials that are needed.

As far as the assembly of the bicycle frames made of carbonaceouus fiber material is concerned, the frame joint formed by a gluing method is usually less rigid, thus providing little or no protection at all.

### SUMMARY OF THE PRESENT INVENTION

The primary objectives of the present invention are to overcome shortcomings of the conventional methods used in assembling the bicycle frames and to provide novel, safe, simple, and cost-ellective methods of assembling a bicycle frame.

### BRIEF DESCRIPTION OF THE DRAWINGS

FIG. 1 shows a three-dimensional view of the disassembled embodiment according to the present invention.

FIG. 2 shows a cut-away view of the assembly embodiment according to the present invention.

FIG. 3 shows a cut-away view of the preferred embodiment according to the present invention.

FIG. 4 shows a cut-away view of another preferred embodiment according to the present invention.

FIG. 5 shows a cut-away view of an additional preferred embodiment according to the present invention.

### DESCRIPTION OF THE PREFERRED EMBODIMENT

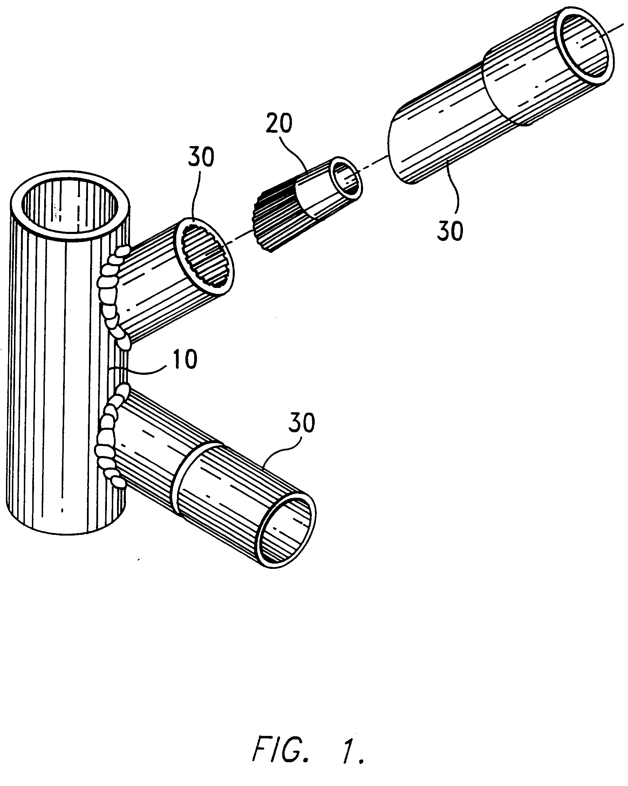

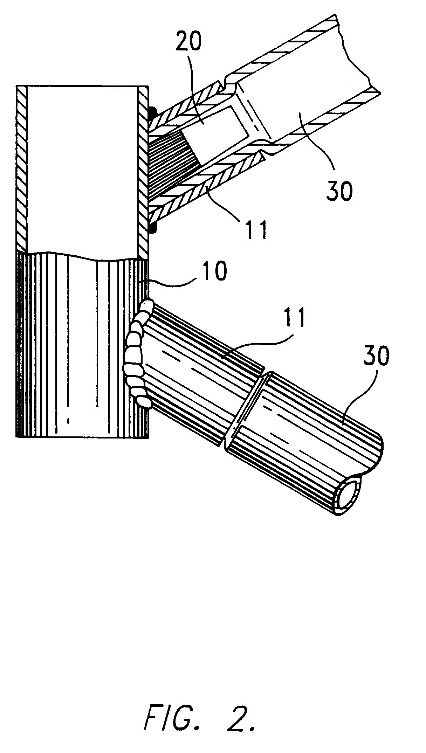

Referring to FIG. 1 and 2, the embodiment of the present invention consists of a frame joint 10 of various types, which has an appropriate number of connection tubes 11 attached thereto. The connection tube 11 contains a tapered set tube 20 installed therein for allowing the frame tube 30 to be held securely inside the connection tube 11 of the frame joint 10. The structure of the frame tube 30 is designed in such a way that it fits very well to insert the tapered set tube 20 therein and can be pressed all the way into the connection tube 11, wherein the open end of frame tube 30 is expanded and firmly held, thanks to the tapered set tube 20. Thus, a welding is not required in assembling a bicycle frame according to the present invention, resulting in a reduction in costs.

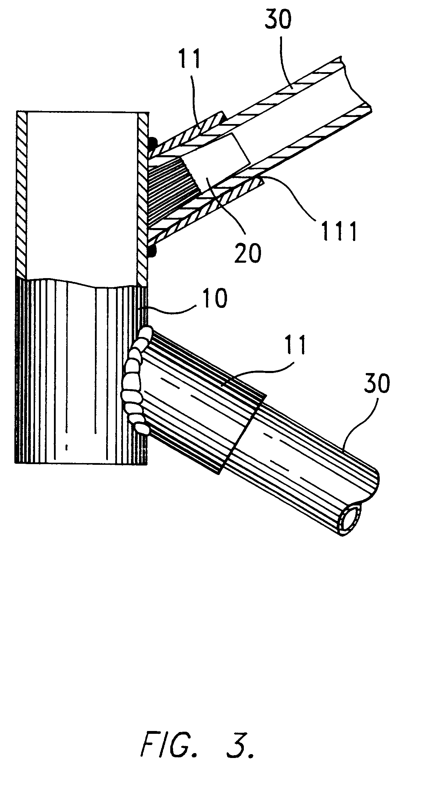

Now referring to FIG. 3, the inside wall located at outer end portion of the connection tube 11 is furnished with the friction surface 111 serving as an anchoring means to hold the frame tube 30 securely in place inside the connection tube 11.

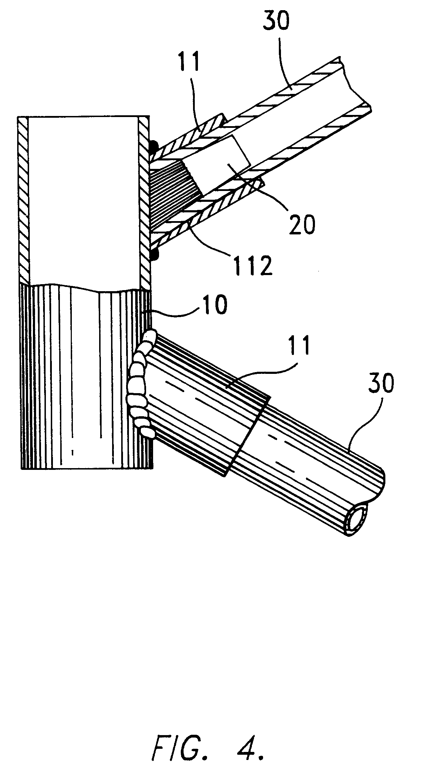

Referring to FIG. 4, the inner end portion 112 of the connection tube 11 is wider than its outer counterpart and thus functions as an additional anchorage. As a result, a frame tube 30, which is inserted into the connection tube 11, can be firmly held in place to ensure the ultimate safety.

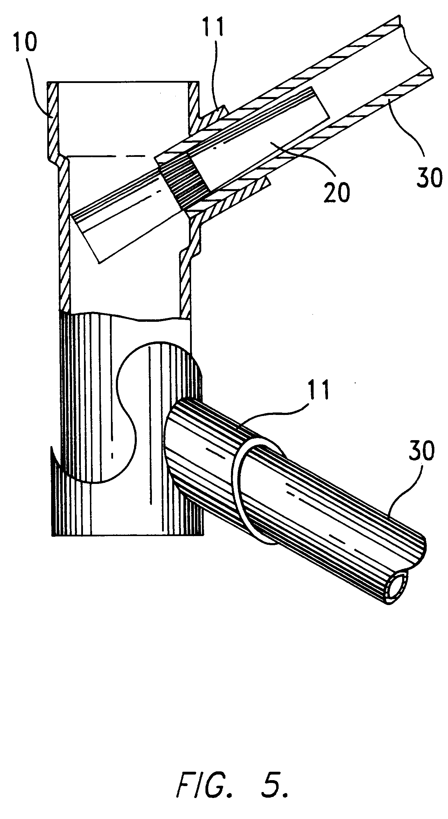

As shown in FIG. 5, the connection tube 11 is not welded on frame joint 10, but it's diecasted with frame joint 10 as one unit.

Therefore, the advantages, relating to the assembly of the bicycle frames according to the present invention, become apparent as compared with the conventional methods using welding and gluing techniques. Moreover, the present invention enhances the cost-effectiveness of assembly as well as the safety features of expensive bicycles such as those made of aluminum alloy or carbonaceous fiber frames.

## Claims

1. A joint apparatus for use in a bicycle frame, comprising the connection tube which is coupled with the frame tube, with a tapered set tube serving as an anchoring means to ensure that said frane tube is securely held in place by said connection tube.

2. A joint apparatus for use in a bicycle frame according to the claim 1, wherein said connection tube being designed as tapered in its interior with inner end portion adjacent to the frame joint being appropriately wider than its outer counterpart.
